# EUROPÄISCHE PATENTSCHRIFT

(11) **EP 1 653 141 B1**
(45) Veröffentlichungstag und Bekanntmachung des Hinweises auf die Patenterteilung: **19.05.2010**
(21) Anmeldenummer: 04025740.4
(22) Anmeldetag: 29.10.2004
(51) Int. Cl.: F16L 25/00, F16L 19/00

(54) **Verbindungseinrichtung und Filtervorrichtung mit einer derartigen Verbindungseinrichtung**
Connecting device and filter device comprising such connecting device
Dispositif de connection et dispositif de filtrage avec un tel dispositif de connection

(43) Veröffentlichungstag der Anmeldung: 03.05.2006
(73) Patentinhaber: ARGO-HYTOS GmbH, 76703 Kraichtal (DE)
(72) Erfinder: Mössinger, Klaus, 74182 Obersulm (DE)
(74) Vertreter: Hoeger, Stellrecht & Partner Patentanwälte

(56) Entgegenhaltungen:
- EP-A- 1 103 752
- WO-A-00/66930
- DE-C1- 10 017 679
- FR-A- 2 528 533
- GB-A- 2 350 656
- US-A- 6 050 500
- US-A1- 2002 104 980

## Beschreibung

Die Erfindung betrifft eine Verbindungseinrichtung zur Verbindung von zwei Hydraulikelementen mit den Merkmalen des Oberbegriffs von Patentanspruch 1.

Die Erfindung betrifft außerdem eine Filtervorrichtung mit mindestens einer daran anschließbaren Anschlußleitung, wobei die Filtervorrichtung ein Gehäuse aufweist, in das eine Filtereinheit einsetzbar ist zum Filtrieren einer Flüssigkeit, insbesondere einer Hydraulikflüssigkeit, und wobei die Anschlußleitung mit dem Gehäuse lösbar und flüssigkeitsdicht verbindbar ist.

Derartige Filtervorrichtungen kommen beispielsweise zur Filtrierung von Hydraulikölen in Hydrauliksystemen zum Einsatz. An das Gehäuse kann hierzu zumindest eine Anschlußleitung angeschlossen werden, über die das Hydrauliköl dem Gehäuse zuführbar oder aus dem Gehäuse ableitbar ist. Die Filtervorrichtung und die Anschlußleitung bilden eine Verbindungseinrichtung mit zwei Rohrstutzen, die lösbar und flüssigkeitsdicht miteinander verbindbar sind. Einer der beiden Rohrstutzen kann an das Gehäuse der Filtervorrichtung angeformt sein, wohingegen der andere Rohrstutzen einen Endbereich der Anschlußleitung ausbildet. Es kann beispielsweise vorgesehen sein, daß sich an den Rohrstutzen der Anschlußleitung eine flexible Schlauchleitung anschließt oder auch eine massive Rohrleitung.

Aus der Offenlegungsschrift EP 1 103 752 A1 ist eine Verbindungseinrichtung mit den Merkmalen des Oberbegriffs von Patentanspruch 1 bekannt. Bei dieser Verbindungseinrichtung kommt zur Sicherstellung einer fluiddichten Verbindung ein Dichtring zum Einsatz, der einen ersten Rohrstutzen in Form eines geriffelten Schlauches außenseitig umgibt. Der Dichtring kann zusammen mit dem freien Ende des Schlauches in den Ringraum eingesetzt werden, der vom zweiten Rohrstutzen bereitgestellt wird.

Aus der Offenlegungsschrift GB 350 656 A ist eine Verbindungseinrichtung bekannt, bei der ein geriffelter Schlauch in eine korrespondierende Hülse eingesetzt und mittels eines Sicherungsteiles in axialer Richtung festgelegt werden kann. Wiederum kommt ein Dichtring zum Einsatz, der den geriffelten Schlauch in Umfangsrichtung umgibt und zusammen mit dem freien Ende des Schlauches in die Hülse eingesetzt werden kann.

Aus der internationalen Offenlegungsschrift WO 00/66930 A ist eine Verriegelungsvorrichtung zum Sichern einer Mutter an einer Nippelanordnung einer Fluidkupplung bekannt. Hierbei ist sichergestellt, dass ein übermäßiges Drehmoment, das auf die Mutter ausgeübt wird, nicht zu einer Beschädigung der Verriegelungsvorrichtung führt.

Aufgabe der vorliegenden Erfindung ist es, eine Verbindungseinrichtung der eingangs genannten Art derart auszugestalten, daß die beiden Rohrstutzen auf einfache Weise miteinander verbunden und voneinander getrennt werden können, wobei ohne aufwändige Bearbeitung der Rohrstutzen eine hohe Dichtigkeit zwischen den beiden Rohrstutzen erzielt werden kann.

Diese Aufgabe wird durch eine Verbindungseinrichtung mit den Merkmalen von Patentanspruch 1 gelöst.

Zur Herstellung einer Verbindung zwischen den beiden Rohrstutzen ist es lediglich erforderlich, den ersten Rohrstutzen in den Ringraum des zweiten Rohrstutzens einzuführen und anschließend das mindestens eine Sperrelement von außen in eine Durchbrechung des Außenrohrstückes einzusetzen, wobei es die Durchbrechung durchgreift und in eine Ausnehmung des ersten Rohrstutzens eintaucht. Es kann dadurch auf sehr einfache Weise eine flüssigkeitsdichte Verbindung zwischen den beiden Rohrstutzen hergestellt werden. Sollen die beiden Rohrstutzen wieder voneinander getrennt werden, so muß hierzu lediglich das Sperrelement in radialer Richtung der Durchbrechung entnommen werden, wobei es die Ausnehmung des ersten Rohrstutzens freigibt, so daß dieser aus dem Ringraum des zweiten Rohrstutzens herausgezogen werden kann.

Das Dichtelement ist erfindungsgemäß als Dichtring ausgestaltet, der im Bereich des geschlossenen Endes des Ringraumes zwischen dem ersten Rohrstutzen und dem Kragen angeordnet ist. Dabei ist der freie Endbereich des ersten Rohrstutzens beim Einsetzen in den Ringraum zwischen den Dichtring und das Außenrohrstück einpreßbar.

Gemäß der Erfindung ist der im Ringraum angeordnete Dichtring in axialer Richtung festlegbar. Hierzu ist vorgesehen, daß er in axialer Richtung zwischen einem Bodenwandabschnitt des Ringraumes und einem Stirnwandabschnitt des ersten Rohrstutzens angeordnet ist. Die Stirnwand des ersten Rohrstutzens bildet eine Stufe aus, wobei ein radial außen liegender Stirnwandabschnitt in Richtung auf den zweiten Rohrstutzen vorsteht und der Dichtring an einen radial innen liegenden Stirnwandabschnitt des ersten Rohrstutzens anlegbar ist.

Günstig ist es, wenn der Kragen ein Innenrohrstück des zweiten Rohrstutzens ausbildet, das in axialer Richtung über das Außenrohrstück übersteht. Bei einer derartigen Ausführungsform ist der zweite Rohrstutzen doppelwandig ausgestaltet mit einem Außenrohrstück und einem überstehenden Innenrohrstück, die zwischen sich den Ringraum ausbilden. Zum Einsetzen in den Ringraum kann der erste Rohrstutzen auf das Innenrohrstück aufgesetzt und anschließend in axialer Richtung in den Ringraum eingeführt werden. Das Innenrohrstück kann sich an seinem freien Endbereich konisch verjüngen, um das Aufsetzen des ersten Rohrstutzens zu vereinfachen.

Vorzugsweise weist das Sicherungsteil zumindest zwei einander diametral gegenüberliegende Sperrelemente auf. Dadurch kann die mechanische Belastbarkeit der Verbindungseinrichtung erhöht werden.

Alternativ oder ergänzend kann vorgesehen sein, daß das Sicherungsteil zumindest zwei in axialer Richtung versetzt zueinander angeordnete Sperrelemente aufweist.

Jedem Sperrelement ist am Außenrohrstück eine Durchbrechung zugeordnet, in das es einsetzbar ist. Von Vorteil ist es hierbei, wenn das jeweilige Sperrelement mit der zugeordneten Durchbrechung einen Formschluß ausbildet. Dadurch wird sichergestellt, daß das in die Durchbrechung eingesetzte Sperrelement unbeweglich am Außenrohrstück des zweiten Rohrstutzens gehalten ist.

Bei einer bevorzugten Ausführungsform weist das Sicherungsteil eine elastisch aufspreizbare Manschette auf, die auf das Außenrohrstück aufsetzbar ist und innenseitig das mindestens eine Sicherungselement trägt. Dadurch wird die Handhabung der Verbindungseinrichtung beim Herstellen einer lösbaren Verbindung zwischen den beiden Rohrstutzen besonders vereinfacht, denn die Manschette kann seitlich auf das Außenrohrstück aufgesetzt werden, wobei das mindestens eine Sperrelement, das innenseitig an der Manschette angeordnet ist, die zugeordnete Durchbrechung durchgreift und in eine Ausnehmung des ersten Rohrstutzens eintaucht. Aufgrund der elastischen Rückstellkraft der Manschette ist sichergestellt, daß das Sperrelement nicht unbeabsichtigt gelöst werden kann. Zusätzliche Haltemittel für das Sperrelement können dadurch entfallen.

Von Vorteil ist es, wenn die Manschette das Außenrohrstück in Umfangsrichtung nur unvollständig umgibt, denn dadurch wird das Aufsetzen der Manschette auf das Außenrohrstück vereinfacht.

Es kann beispielsweise vorgesehen sein, daß die Manschette das Außenrohrstück in Umfangsrichtung über einen Winkelbereich von etwa 210° bis ca. 330°, vorzugsweise über einen Winkelbereich von ca. 270° bis etwa 330°, umgibt. Als besonders vorteilhaft hat es sich erwiesen, wenn die Manschette das Außenrohrstück über einen Winkelbereich von ca. 300° umgibt. Die Manschette weist aufgrund ihrer das Außenrohrstück nur unvollständig umgebenden Gestaltung eine Durchbrechung auf. Zum Aufsetzen der elastischen Manschette kann diese im Bereich ihrer Durchbrechung an das Außenrohrstück seitlich angelegt und anschließend auf das Außenrohrstück aufgeschnappt werden, wobei sie flächig an der Außenseite des Außenrohrstücks anliegt und das mindestens eine innenseitig an der Manschette angeordnete Sperrelement eine Durchbrechung des Außenrohrstückes durchgreift und in eine Ausnehmung des ersten Rohrstutzens eintaucht.

Es kann vorgesehen sein, daß sich das mindestens eine Sperrelement in Umfangsrichtung praktisch entlang der gesamten Innenseite der Manschette erstreckt. Als vorteilhaft hat es sich aber erwiesen, wenn sich das mindestens eine Sperrelement in Umfangsrichtung nur über einen Teilbereich der Manschette erstreckt. So kann beispielsweise vorgesehen sein, daß sich das mindestens destens eine Sperrelement in Umfangsrichtung über einen Winkelbereich von etwa 20° bis ca. 50°, insbesondere über einen Winkelbereich von etwa 25° bis ca. 45°, erstreckt.

Von Vorteil ist es, wenn das mindestens eine Sperrelement einstückig mit der Manschette verbunden ist. Dies ermöglicht eine kostengünstige Herstellung der beiden Teile.

Es kann vorgesehen sein, daß mindestens ein Sperrelement formschlüssig in eine Ausnehmung des ersten Rohrstutzens eintaucht. Eine derartige Ausgestaltung stellt sichter, daß der erste Rohrstutzen weder in axialer Richtung noch in Umfangsrichtung bezogen auf den zweiten Rohrstutzen versetzbar ist.

Erfindungsgemäß sind die beiden Rohrstutzen unter Beibehaltung ihrer flüssigkeitsdichten Verbindung relativ zueinander in Umfangsrichtung verdrehbar. Bei einer bevorzugten Ausführungsform erstreckt sich deshalb die mindestens eine Ausnehmung in Umfangsrichtung über einen größeren Winkelbereich als das in die Ausnehmung eintauchende Sperrelement. In axialer Richtung kann das Sperrelement mit der Ausnehmung einen Formschluß ausbilden, so daß sichergestellt ist, daß die beiden Rohrstutzen in axialer Richtung unbeweglich miteinander verbunden sind. Im Gegensatz hierzu können die beiden Rohrstutzen in Umfangsrichtung gegeneinander verdreht werden, wenn die Ausnehmung sich über einen größeren Winkelbereich erstreckt als das Sperrelement.

Es kann beispielsweise vorgesehen sein, daß die mindestens eine Ausnehmung als den Rohrstutzen in Umfangsrichtung umgebende Ringnut ausgestaltet ist. Dies ermöglicht es, die beiden Rohrstutzen in Umfangsrichtung um 360° zueinander zu verdrehen unter Beibehaltung ihrer flüssigkeitsdichten Verbindung.

Bei einer bevorzugten Ausführungsform sind am ersten und am zweiten Rohrstutzen miteinander zusammenwirkende Anschläge angeordnet, wobei die beiden Rohrstutzen bei Überschreiten eines bestimmten Drehmomentes unter Überwindung der Anschläge in einer ersten Drehrichtung entlang ihres Umfangs gegeneinander verdrehbar sind zur Begrenzung eines von einem auf den anderen der beiden Rohrstutzen übertragbaren Drehmomentes. Bei einer derartigen Ausgestaltung sind die beiden Rohrstutzen in Umfangsrichtung nicht frei zueinander verdrehbar, sondern beim Verdrehen der Rohrstutzen stoßen die Anschläge aneinander an, so daß auf einen der beiden Rohrstutzen ein Drehmoment ausgeübt werden kann, beispielsweise um eine massive Rohrleitung mit einem der Rohrstutzen zu verschrauben. Überschreitet jedoch das einwirkende Drehmoment in einer ersten Drehrichtung einen maximal zulässigen Wert, so können die aneinander anliegenden Anschläge überwunden werden, das heißt die Anschläge gleiten aneinander entlang und ermöglichen somit eine relative Drehbewegung der beiden Rohrstutzen in der ersten Drehrichtung. Dadurch kann bezüglich der ersten Drehrichtung das von einem auf den anderen Rohrstutzen übertragbare Drehmoment auf einen Maximalwert begrenzt werden.

Vorzugsweise sind die Anschläge nur bei einer relativen Drehbewegung der Rohrstutzen in der ersten Drehrichtung bei Überschreiten eines bestimmten Drehmomentes überwindbar, während sie bei einer Drehbewegung in der entgegengesetzten Drehrichtung nicht überwindbar sind. Dies hat den Vorteil, daß beispielsweise eine massive Rohrleitung in der ersten Drehrichtung mit einem der beiden Rohrstutzen verschraubt werden kann, wobei das von der Rohrleitung beim Verschrauben auf den Rohrstutzen ausübbare Drehmoment begrenzt ist, denn bei Überschreiten eines bestimmten Drehmomentes verdreht sich der Rohrstutzen, mit dem die Rohrleitung verschraubt wird, gegenüber dem anderen Rohrstutzen, mit dem er verbunden ist. Wird jedoch die Schraubverbindung wieder gelöst, indem die Rohrleitung in der entgegengesetzten Richtung verdreht wird, so ist das hierbei von der Rohrleitung auf den Rohrstutzen ausübbare Drehmoment nicht beschränkt, denn bezüglich dieser zweiten Drehrichtung, die der ersten Drehrichtung entgegengesetzt ist, sind die beiden Rohrstutzen mittels der zusammenwirkenden Anschläge relativ zueinander unverdrehbar.

Es kann beispielsweise vorgesehen sein, daß die Anschläge ein sägezahnartiges Querschnittprofil aufweisen. Sie können jeweils eine Stirnflanke und eine langgestreckte Längsflanke aufweisen, wobei sie beim Verdrehen in der ersten Drehrichtung mit ihren Längsflanken an einander entlang gleiten und die Längsflanken zunehmend gegeneinander verklemmt werden, so daß zum Verdrehen ein zunehmendes Drehmoment erforderlich ist. Bei Überschreiten eines maximalen Drehmomentes bezüglich der ersten Drehrichtung wird die Verklemmung der Längsflanken abrupt freigegeben, so dass die Drehbewegung fortgesetzt werden kann mit wieder zunehmendem Drehmoment. Somit können die beiden Rohrstutzen relativ zueinander verdreht werden, wobei zwischen den Rohrstutzen nur ein beschränktes Drehmoment übertragen werden kann. Bei einer Drehbewegung in der entgegengesetzten Richtung können jedoch die beiden Stirnflanken gegeneinander stoßen und ein unüberwindbares Hindernis darstellen, so dass bezüglich dieser Drehrichtung keine Drehmomentbegrenzung vorliegt.

Von besonderem Vorteil ist es, wenn die Anschläge eine evolventenförmig gekrümmte Längsflanke aufweisen. Es hat sich gezeigt, daß dadurch eine besonders wirksame Drehmomentbegrenzung erzielt werden kann.

Die miteinander zusammenwirkenden Anschläge sind bei einer bevorzugten Ausführungsform an der Außenseite des Innenrohrstücks und an der Innenseite des ersten Rohrstutzens angeordnet.

Günstig ist es, wenn der erste Rohrstutzen mehrere, in axialer Richtung versetzt zueinander angeordnete Ausnehmungen aufweist.

Es kann vorgesehen sein, daß zumindest in eine Ausnehmung des ersten Rohrstutzens mehrere Sperrelemente des Sicherungsteiles eintauchen.

Vorzugsweise ist das Sicherungsteil aus Kunststoff gefertigt, beispielsweise aus Polyamid.

Auch die beiden Rohrstutzen sind bei einer bevorzugten Ausgestaltung aus Kunststoff gefertigt, wobei wiederum Polyamid verwendet werden kann.

Die voranstehend erläuterte Verbindungseinrichtung kommt insbesondere bei einer Filtervorrichtung der eingangs genannten Art zum Einsatz, die mit mindestens einer Anschlußleitung lösbar verbindbar ist. Hierzu kann vorgesehen sein, daß die Filtervorrichtung und die mindestens eine Anschlußleitung eine Verbindungseinrichtung der voranstehend erläuterten Art ausbilden.

Das Gehäuse der Filtervorrichtung kann mindestens einen ersten und/oder mindestens einen zweiten Rohrstutzen aufweisen, und die jeweils anzuschließende Anschlußleitung kann entsprechend mit einem zweiten Rohrstutzen oder mit einem ersten Rohrstutzen ausgestaltet sein.

Vorzugsweise ist eine Außenwand des Gehäuses mit mindestens einem ersten Rohrstutzen einstückig verbunden. Hierzu kann vorgesehen sein, daß das Gehäuse und der mindestens eine erste Rohrstutzen aus Kunststoff gefertigt sind. Von besonderem Vorteil ist es, wenn der Kunststoff elektrisch leitfähig ist, da dadurch statische Aufladungen des Gehäuses vermieden werden können.

Die nachfolgende Beschreibung einer bevorzugten Ausführungsform der Erfindung dient im Zusammenhang mit der Zeichnung der näheren Erläuterung. Es zeigen:
- Figur 1:: eine schematische Darstellung einer Filtervorrichtung mit drei daran angeschlossenen Anschlußleitungen;
- Figur 2:: eine schaubildliche Darstellung von Detail A aus Figur 1;
- Figur 3:: eine Schnittansicht längs der Linie 3-3 in Figur 1;
- Figur 4:: eine Schnittansicht längs der Linie 4-4 in Figur 3 und
- Figur 5:: eine Schnittansicht entsprechend Figur 4 einer alternativen Ausgestaltung.

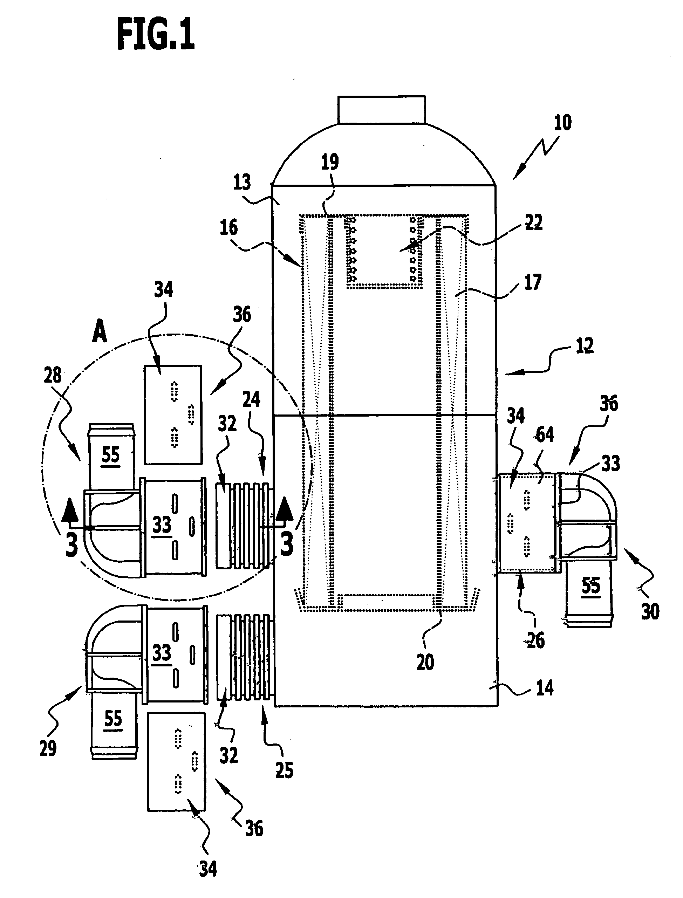

In Figur 1 ist eine Filtervorrichtung 10 schematisch dargestellt mit einem zweiteiligen Gehäuse 12, das ein erstes Gehäuseteil 13 und ein zweites Gehäuseteil 14 aufweist. Die beiden Gehäuseteile 13, 14 sind über entsprechende Gewinde, die in der Zeichnung nicht dargestellt sind, miteinander verschraubt. Sie nehmen ein Filterelement 16 auf, das ein in üblicher Weise sternförmig gefaltetes Filtermaterial 17 umfaßt, das stirnseitig von einer ersten Endscheibe 19 und einer zweiten Endscheibe 20 abgedeckt ist. Die erste Endscheibe 19 trägt in üblicher Weise ein Bypass-Ventil 22.

Die Filtervorrichtung 10 ist in der dargestellten Ausführungsform als Rücklauffilter ausgestaltet und dem Fachmann an sich bekannt.

Das Gehäuse ist aus Kunststoff, nämlich aus Polyamid, gefertigt und weist zwei Einlässe 24, 26 sowie einen Auslaß 25 auf. An die Einlässe 24, 26 und den Auslaß 25 kann jeweils eine Anschlußleitung 28, 30 bzw. 29 angeschlossen werden. Die Einlässe 24, 26 und der Auslaß 25 sind identisch ausgestaltet. Sie weisen jeweils einen ersten Rohrstutzen 32 auf. Auch die Anschlußleitungen 28, 30, 29 sind identisch ausgebildet, sie umfassen jeweils einen zweiten Rohrstutzen 33. Die einander jeweils zugeordneten ersten und zweiten Rohrstutzen 32, 33 sind lösbar und flüssigkeitsdicht miteinander verbindbar, wobei zur Sicherung der lösbaren Verbindung jeweils ein Sicherungsteil 34 zum Einsatz kommt. In Figur 1 sind der Einlaß 24, der Auslaß 25 und die diesen jeweils zugeordneten Anschlußleitungen 28 bzw. 29 sowie das jeweilige Sicherungsteil 34 versetzt zueinander angeordnet, um das Zusammenwirken dieser Teile zu verdeutlichen, während der Einlaß 26 und die zugeordnete Anschlußleitung 30 im mittels des entsprechenden Sicherungsteils 34 miteinander verbundenen Zustand dargestellt sind.

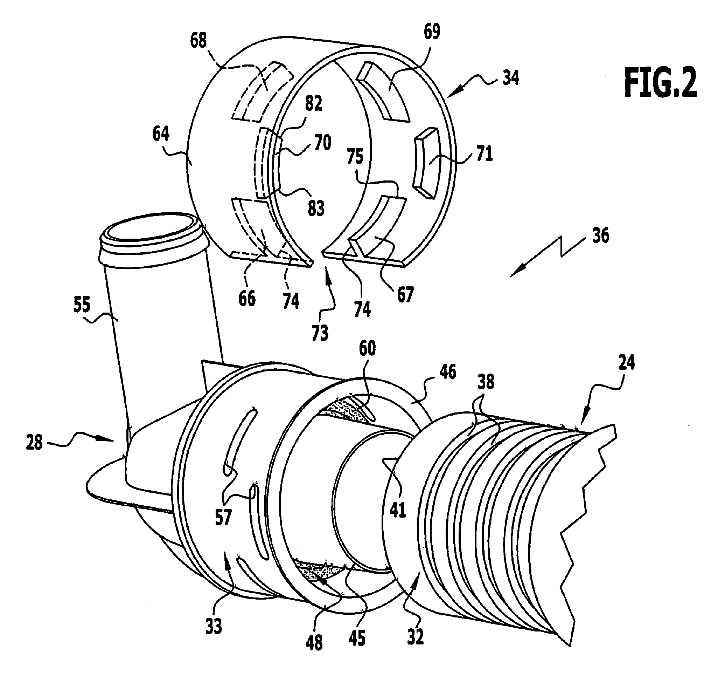

Die miteinander zusammenwirkenden ersten und zweiten Rohrstutzen 32, 33 bilden in Kombination mit dem jeweiligen Sicherungsteil 34 eine Verbindungseinrichtung 36 aus, die in den Figuren 2, 3 und 4 im Detail dargestellt ist und mit deren Hilfe die Ein- und Auslässe 24, 25, 26 jeweils mit einer Anschlußleitung 28, 29 bzw. 30 lösbar und flüssigkeitsdicht verbunden werden können.

Der erste Rohrstutzen 32 weist außenseitig mehrere in gleichmäßigem Abstand zueinander angeordnete Ringnuten 38 auf, die jeweils eine Ausnehmung ausbilden. An seinem freien Ende trägt der erste Rohrstutzen 32 eine Innennut 40, durch die die freie Stirnwand des ersten Rohrstutzens 32 eine stufige Ausgestaltung erhält mit einem radial außen liegenden ersten Stirnwandabschnitt 41 und einem radial innen liegenden zweiten Stirnwandabschnitt 42, der in axialer Richtung versetzt zum ersten Stirnwandabschnitt 41 angeordnet ist.

Der zweite Rohrstutzen 32 umfaßt einen axial ausgerichteten Kragen in Form eines Innenrohrstücks 45 und ein koaxial ausgerichtetes Außenrohrstück 46, die zwischen sich einen Ringraum 48 definieren, der auf der dem ersten Rohrstutzen 32 abgewandten Seite mittels einer stufig ausgestalteten Bodenwand geschlossen ist. Die Bodenwand weist einen radial außen liegenden ersten Bodenwandabschnitt 51 und einen radial innen liegenden zweiten Bodenwandabschnitt 52 auf, die über eine Stufe 53 miteinander verbunden sind. Im Bereich der Bodenwandabschnitte 51 und 52 gehen das Innenrohrstück 45 und das Außenrohrstück 46 einstückig ineinander über und bilden gemeinsam ein in der dargestellten Ausführungsform rechtwinkelig vom zweiten Rohrstutzen 33 abstehendes Anschlußrohr 55, an das beispielsweise eine an sich bekannte flexible Schlauchleitung anschließbar ist.

Das Außenrohrstück 46 weist insgesamt sechs Durchbrechungen 57 auf. Vier der Durchbrechungen 57, von denen sich jeweils zwei diametral gegenüberliegen, sind in axialer Richtung auf derselben Höhe und in Umfangsrichtung des Außenrohrstückes 46 gleichmäßig verteilt angeordnet. Zwei weitere Durchbrechungen 47 sind in axialer Richtung und in Umfangsrichtung versetzt zu den restlichen Durchbrechungen 57 angeordnet und stehen sich ebenfalls diametral gegenüber. Die Durchbrechungen 57 sind schlitzförmig ausgestaltet und erstrecken sich in Umfangsrichtung des Außenrohrstückes 26 über einen Winkelbereich von etwa 35° bis 40°.

Der Ringraum 48 nimmt einen Dichtring 60 auf, der das Innenrohrstück 45 in Umfangsrichtung umgibt und am radial innen liegenden Bodenwandabschnitt 52 anliegt, wobei er sich in radialer Richtung lediglich bis in Höhe der Stufe 53 erstreckt, so daß zwischen dem Dichtring 60 und dem Außenrohrstück 46 ein Zwischenraum freibleibt.

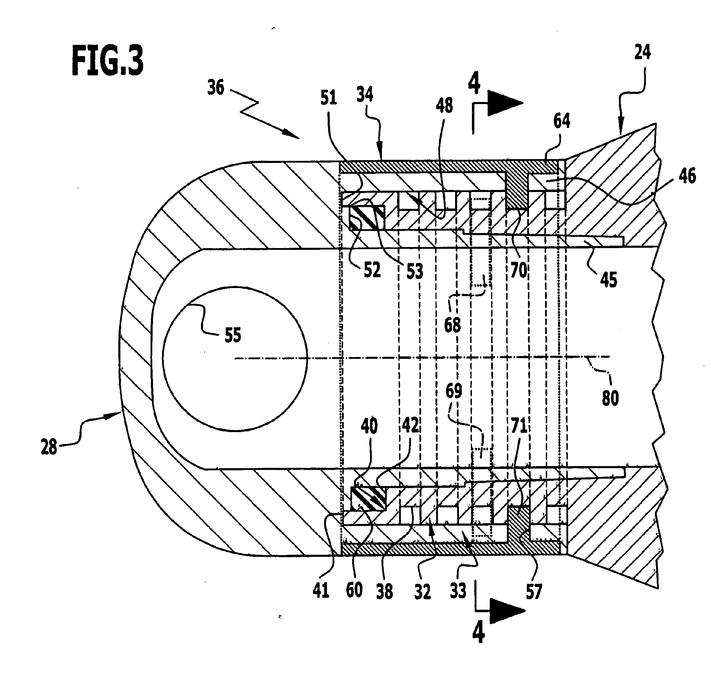

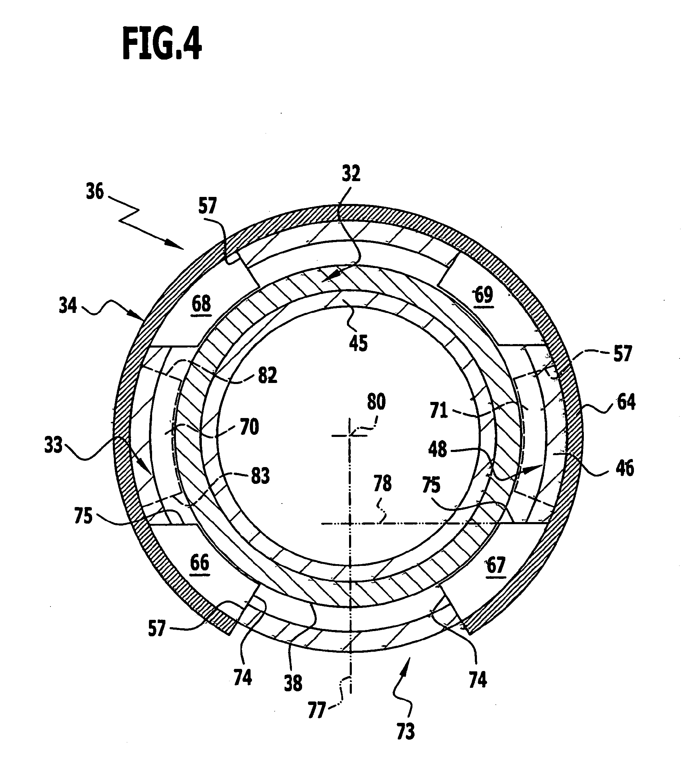

Wie insbesondere aus den Figuren 3 und 4 deutlich wird, kann der zweite Rohrstutzen 33 auf den ersten Rohrstutzen 32 aufgesetzt werden, wobei der erste Rohrstutzen 32 in den Ringraum 48 eintaucht. Das Innenrohrstück 45 steht in axialer Richtung über das Außenrohrstück 46 vor. Dies erleichtert das Einsetzen des ersten Rohrstutzens 32 in den Ringraum 48. Der freie Endbereich des ersten Rohrstutzens 32 taucht in den Zwischenraum zwischen dem Dichtring 60 und dem Außenrohrstück 46 ein, so daß der Dichtring 60 mit seiner dem zweiten Bodenwandabschnitt 52 abgewandten Stirnseite am zweiten Stirnwandabschnitt 42 des ersten Rohrstutzens 32 anliegt. Die Stärke des Dichtringes 60 ist derart gewählt, daß er beim Einfügen des ersten Rohrstutzens 32 in den Ringraum 48 flüssigkeitsdicht mit dem Endbereich des ersten Rohrstutzens 32 und mit dem dem zweiten Bodenwandabschnitt 52 benachbarten Umfangsbereich des Innenrohrstückes 45 verpreßt wird.

Die Durchbrechungen 57 des Außenrohrstückes 46 sind in axialer Richtung derart angeordnet, daß sie bei in den Ringraum 48 eingesetztem ersten Rohrstutzen 32 jeweils mit einer Ringnut 48 fluchten.

Zur axialen Festlegung der beiden Rohrstutzen 32, 33 kommt das Sicherungsteil 34 zum Einsatz, das eine sich in Umfangsrichtung über einen Winkelbereich von etwa 300° erstreckende Manschette 64 umfaßt. Die Manschette 64 trägt innenseitig insgesamt sechs Sperrelemente in Form von radial einwärts gerichteten Vorsprüngen 66, 67, 68, 69, 70, 71, die jeweils einer Durchbrechung 57 des Außenrohrstückes 46 zugeordnet sind.

Da sich die Manschette 64 in Umfangsrichtung lediglich über einen Teilbereich des Außenrohrstückes 46 erstreckt, definiert sie in Umfangsrichtung mit ihren freien Enden einen Freiraum 73. An den Freiraum 73 schließt sich auf der Innenseite der Manschette 64 jeweils ein Vorsprung 66 bzw. 67 an, der unmittelbar an den Freiraum 73 angrenzend eine in radialer Richtung verlaufende erste Seitenkante 74 aufweist sowie eine der ersten Seitenkante 74 abgewandte zweite Seitenkante 75, die kolinear zu einer senkrecht zur Winkelhalbierenden 77 des Freiraumes 73 ausgerichteten Sekante 78 verläuft.

Die Vorsprünge 66, 67, 68 und 69 sind in axialer Richtung auf gleicher Höhe angeordnet, wobei der Vorsprung 69 dem Vorsprung 66 diametral gegenüberliegt und bezüglich einer Mittelachse 80 der Manschette 64 spiegelsymmetrisch zum Vorsprung 66 ausgestaltet ist. In entsprechender Weise liegt der Vorsprung 68 dem Vorsprung 67 diametral gegenüber und ist bezüglich der Mittelachse 80 spiegelsymmetrisch zum Vorsprung 67 ausgestaltet.

Die Vorsprünge 70 und 71 sind axial in Richtung auf das freie Ende des zweiten Rohrstutzens 33 versetzt zu den Vorsprüngen 66 bis 69 und in Umfangsrichtung mittig zwischen den Vorsprüngen 66 und 68 bzw. 67 und 69 angeordnet und ebenfalls spiegelsymmetrisch bezüglich der Mittelachse 80 zueinander ausgerichtet, wobei sie radial verlaufende erste und zweite Seitenkanten 82 bzw. 83 aufweisen.

Mit dem Freiraum 73 kann das Sicherungsteil 34 seitlich an das Außenrohrstück 46 des zweiten Rohrstutzens 33 angelegt werden. Anschließend kann es aufgrund seiner materialelastischen Ausgestaltung auf das Außenrohrstück 46 aufgeschnappt werden, indem sich die Manschette 64 radial aufweitet und anschließend wieder in radialer Richtung zusammenzieht, wobei die Vorsprünge 66 bis 71 jeweils eine zugeordnete Durchbrechung 57 des Außenrohrstückes 46 durchgreifen und in eine der Ringnuten 38 des ersten Rohrstutzens 32 eintauchen. Der erste Rohrstutzen 32 ist dadurch in axialer Richtung unverschieblich am zweiten Rohrstutzen 33 gehalten, während die beiden Rohrstutzen 32 und 33 in Umfangsrichtung gegeneinander verdreht werden können, ohne daß dadurch die flüssigkeitsdichte Verbindung der beiden Rohrstutzen 32, 33 beeinträchtigt wird. Dies ermöglicht es, beim Einbau der Filtervorrichtung 10 und der Anschlußleitungen 28, 29, 30 in einen Montageraum die Anschlußleitungen 28, 29 und 30 entsprechend den herrschenden Platzverhältnissen relativ zur Filtervorrichtung 10 optimal auszurichten.

Soll die Verbindung zwischen den Rohrstutzen 32 und 33 wieder gelöst werden, so ist es hierzu lediglich erforderlich, das Sicherungsteil 34 seitlich vom Außenrohrstück 46 des zweiten Rohrstutzens 33 abzulösen, indem die Manschette 64 radial aufgespreizt wird. Mittels des Sicherungsteiles 34 kann somit auf einfache Weise und ohne Zuhilfenahme von zusätzlichem Werkzeug eine flüssigkeitsdichte Verbindung zwischen den Rohrstutzen 32 und 33 hergestellt und auch wieder getrennt werden.

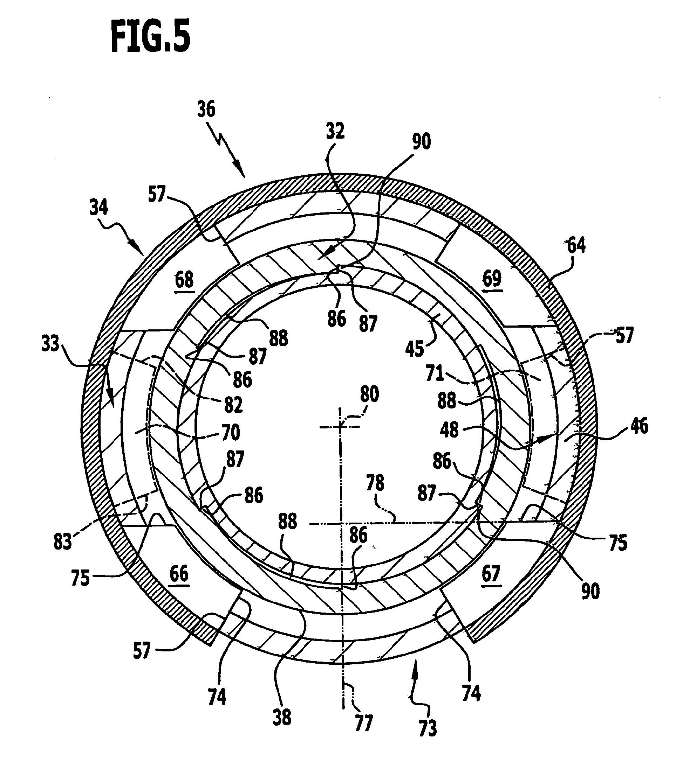

Wie bereits erläutert, können bei der voranstehend im Einzelnen erläuterten Ausführungsform die beiden Rohrstutzen 32, 33 in Umfangsrichtung relativ zueinander frei verdreht werden. In Figur 5 ist eine alternative Ausgestaltung schematisch dargestellt, die weitgehend identisch ist mit der voranstehend im Einzelnen beschriebenen Ausführungsform, wie sie in den Figuren 1 bis 4 illustriert ist. In Figur 5 werden daher für gleiche Bauteile die identischen Bezugszeichen verwendet wie in den Figuren 1 bis 4. Zur Vermeidung von Wiederholungen wird diesbezüglich auf die voranstehenden Erläuterungen Bezug genommen.

Von der in den Figuren 1 bis 4 dargestellten Ausführungsform unterscheidet sich die in Figur 5 schematisch wiedergegebene Ausgestaltung dadurch, daß der erste Rohrstutzen 32 auf seiner Innenseite mehrere radial einwärts gerichtete Anschläge 86 aufweist, die in Umfangsrichtung gleichmäßig verteilt angeordnet sind und ein sägezahnartiges Profil aufweisen mit einer schräg zur Radialrichtung geneigten Stirnflanke 87, an die sich in Umfangsrichtung eine langgestreckte evolventenförmig gekrümmte Längsflanke 88 anschließt. Insgesamt weist der erste Rohrstutzen 32 sechs in gleichmäßigem Winkelabstand zueinander angeordnete Anschläge 86 auf. Korrespondierende Anschläge 90 sind an der Außenseite des Innenrohrstücks 45 in gleichmäßigem Abstand zueinander angeordnet. Das Innenrohrstück 45 trägt allerdings lediglich drei Anschläge 90, wobei diese ebenfalls eine schräg zur Radialrichtung geneigte Stirnflanke aufweisen, an die sich eine langgestreckte evolventenförmige Längsflanke anschließt.

Werden bei der in Figur 5 dargestellten Ausführungsform die beiden Rohrstutzen 32, 33 in einer ersten Drehrichtung gegeneinander verdreht, wobei sich die einander zugewandten Stirnflanken der zugeordneten Anschläge 86 und 90 voneinander entfernen, so erfolgt eine Drehbewegung entgegen dem Widerstand der an einander gleitenden, evolventenförmig gekrümmten Längsflanken 88, die sich zunehmend gegeneinander verklemmen. Der Widerstand und damit das zur Drehbewegung erforderliche Drehmoment wird folglich zunehmend größer. Wird jedoch das einwirkende Drehmoment bezüglich der ersten Drehrichtung über einen maximalen Wert hinaus erhöht, so gleiten die schräg zur Radialrichtung geneigten Stirnflanken 87 der Anschläge 86, 90 in der ersten Drehrichtung aneinander entlang und geben dadurch die Längsflanken 88 wieder frei, das heißt die Anschläge 86, 90 können in der ersten Drehrichtung überwunden werden, und folglich kann bezüglich der ersten Drehrichtung zwischen den Rohrstutzen 32 und 33 nur ein begrenztes Drehmoment übertragen werden. Werden die beiden Rohrstutzen 32, 33 in der der ersten Drehrichtung entgegengesetzten zweiten Drehrichtung gegeneinander verdreht, so stoßen die einander zugewandten Stirnflanken 87 der Anschläge 86, 90 aneinander an, das heißt in der zweiten Drehrichtung können die Anschläge 86, 90 nicht überwunden werden.

Eine derartige Ausführungsform ist insbesondere dann von Vorteil, wenn beispielsweise der zweite Rohrstutzen 33 Teil eines Anschlußelementes ist, das auf seiner dem ersten Rohrstutzen 32 abgewandten Seite mit einem Leitungsteil, beispielsweise einer massiven Rohrleitung, verschraubt werden kann, das koaxial zum zweiten Rohrstutzen 33 ausgerichtet ist. Beim Verschrauben des Leitungsteiles mit dem Anschlußelement erfährt das Anschlußelement ein Drehmoment bezüglich der ersten Drehrichtung und kann sich über den zweiten Rohrstutzen 33 mittels der Anschläge 86 und 90 am ersten Rohrstutzen 32 abstützen. Überschreitet das einwirkende Drehmoment jedoch einen Maximalwert, so gibt der erste Rohrstutzen 32 den zweiten Rohrstutzen 33 in der ersten Drehrichtung frei, das heißt die beiden Rohrstutzen 32, 33 können gegeneinander verdreht werden, und dies wiederum stellt sicher, daß beim Verschrauben des Leitungsteiles mit dem Anschlußelement letzteres nicht aufgrund eines unzulässig hohen Drehmomentes beschädigt werden kann. Wird die Schraubverbindung wieder gelöst, indem das Leitungsteil in der der ersten Drehrichtung entgegengesetzten zweiten Drehrichtung verdreht wird, so kann sich der zweite Rohrstutzen 33 über die in dieser Drehrichtung unüberwindlichen Anschläge 86, 90 am ersten Rohrstutzen 32 abstützen.

## Patentansprüche

1. Verbindungseinrichtung zur Verbindung von zwei Hydraullkelementen, mit einem ersten Rohrstutzen (32), einem zweiten Rohrstutzen (33), einem Dichtelement (60) und einem Sicherungsteil (34), wobei die beiden Rohrstutzen (32, 33) aus Kunststoff gefertigt und mittels des Sicherungsteiles (34) lösbar und flüssigkeitsdlcht miteinander verbindbar und unter Beibehaltung ihrer flüssigkeitsdichten Verbindung relativ zueinander in Umfangsrichtung verdrehbar sind, wobei der erste Rohrstutzen (32) außenseitig zumindest eine Ausnehmung (38) aufweist und der zweite Rohrstutzen (33) einen Kragen (45) sowie ein Außenrohrstück (46), die zwischen sich einen in axialer Richtung einseitig begrenzten Ringraum (48) ausbilden, der das Dichtelement (60) aufnimmt, wobei das Außenrohrstück (46) zumindest eine Durchbrechung (57) aufweist und der erste Rohrstutzen (32) in den Ringraum (48) einführbar ist, und
wobei das Sicherungsteil (34) mindestens ein Sperrelement (66, 67, 68, 69, 70, 71) aufweist, das in die Durchbrechung (57) einsetzbar ist, wobei es in eine Ausnehmung (38) eintaucht, und wobei das Dichtelement als Dichtring (60) ausgestaltet ist, der im Bereich des geschlossenen Endes des Ringraumes (48) zwischen dem ersten Rohrstutzen (32) und dem Kragen (45) angeordnet ist, **dadurch gekennzeichnet, daß** der freie Endbereich des ersten Rohrstutzens (32) beim Einsetzen in den Ringraum (48) zwischen den Dichtring (60) und das Außenrohrstück (46) einpressbar ist, wobei die freie Stirnwand des ersten Rohrstutzens (32) stufig ausgestaltet ist und einen radial außen liegenden ersten Stirnwandabschnitt (41) und einen axial versetzt zu diesem angeordneten radial innen liegenden zweiten Stirnwandabschnitt (42) aufweist, und daß der Dichtring (60) in axialer Richtung zwischen einem Bodenwandabschnitt (52) des Ringraumes (48) und dem zweiten Stirnwandabschnitt (42) des ersten Rohrstutzens (32) angeordnet ist.

2. Verbindungseinrichtung nach Anspruch 1, **dadurch gekennzeichnet, daß** der Kragen ein Innenrohrstück (45) ausbildet, das in axialer Richtung über das Außenrohrstück (46) übersteht.

3. Verbindungseinrichtung nach Anspruch 1 oder 2, **dadurch gekennzeichnet, daß** das Sicherungsteil (34) zumindest zwei einander diametral gegenüberliegende Sperrelemente (66, 69; 67, 68; 70, 71) aufweist.

4. Verbindungseinrichtung nach Anspruch 1, 2 oder 3, **dadurch gekennzeichnet, daß** das Sicherungsteil (34) zumindest zwei in axialer Richtung versetzt zueinander angeordnete Sperrelemente (66, 67, 68, 69; 70, 71) aufweist.

5. Verbindungseinrichtung nach einem der Ansprüche 1 bis 4, **dadurch gekennzeichnet, daß** das mindestens eine Sperrelement (66 - 71) mit einer zugeordneten Durchbrechung (57) einen Formschluß ausbildet.

6. Verbindungseinrichtung nach einem der voranstehenden Ansprüche, **dadurch gekennzeichnet, daß** das Sicherungsteil (34) eine elastisch aufspreizbare Manschette (64) aufweist, die auf das Außenrohrstück (46) aufsetzbar ist und innenseitig das mindestens eine Sperrelement (66 - 71) trägt.

7. Verbindungseinrichtung nach Anspruch 6, **dadurch gekennzeichnet, daß** die Manschette (64) das Außenrohrstück (46) in Umfangsrichtung nur unvollständig umgibt.

8. Verbindungseinrichtung nach Anspruch 7, **dadurch gekennzeichnet, daß** die Manschette (64) das Außenrohrstück (46) in Umfangsrichtung über einen Winkelbereich von etwa 210° bis ca. 330° umgibt.

9. Verbindungseinrichtung nach einem der Ansprüche 6 bis 8, **dadurch gekennzeichnet, daß** sich das mindestens eine Sperrelement (66 - 71) in Umfangsrichtung nur über einen Teilbereich der Manschette (64) erstreckt.

10. Verbindungseinrichtung nach Anspruch 9, **dadurch gekennzeichnet, daß** sich das mindestens eine Sperrelement (66 - 71) in Umfangsrichtung über einen Winkelbereich von etwa 20° bis ca. 50° erstreckt.

11. Verbindungseinrichtung nach einem der Ansprüche 6 bis 10, **dadurch gekennzeichnet, daß** das mindestens eine Sperrelement (66 - 71) einstückig mit der Manschette (64) verbunden ist.

12. Verbindungseinrichtung nach einem der voranstehenden Ansprüche, **dadurch gekennzeichnet, daß** sich die mindestens eine Ausnehmung (38) in Umfangsrichtung über einen größeren Winkelbereich erstreckt als das mindestens eine in die Ausnehmung (38) eintauchende Sperrelement (66 - 71).

13. Verbindungseinrichtung nach einem der voranstehenden Ansprüche, **dadurch gekennzeichnet, daß** die mindestens eine Ausnehmung als den ersten Rohrstutzen (32) in Umfangsrichtung umgebende Ringnut (38) ausgestaltet ist.

14. Verbindungseinrichtung nach einem der voranstehenden Ansprüche, **dadurch gekennzeichnet, daß** am ersten und am zweiten Rohrstutzen (32, 33) miteinander zusammenwirkende Anschläge (86, 90) angeordnet sind, wobei die beiden Rohrstutzen (32, 33) beim Überschreiten eines bestimmten Drehmomentes unter Überwindung der Anschläge (86, 90) in einer ersten Drehrichtung entlang ihres Umfangs gegeneinander verdrehbar sind zur Begrenzung eines von einem auf den anderen der beiden Rohrstutzen (32, 33) übertragbaren Drehmoments.

15. Verbindungseinrichtung nach Anspruch 14, **dadurch gekennzeichnet, daß** die miteinander zusammenwirkenden Anschläge (86, 90) nur bei einer relativen Drehbewegung der Rohrstutzen (32, 33) in der ersten Drehrichtung bei Überschreiten eines bestimmten Drehmomentes überwindbar sind, während sie bei einer relativen Drehbewegung der Rohrstutzen (32, 33) in der entgegengesetzten Drehrichtung nicht überwindbar sind.

16. Verbindungseinrichtung nach Anspruch 14 oder 15, **dadurch gekennzeichnet, daß** die Anschläge (86, 90) ein sägezahnartiges Querschnittprofil aufweisen.

17. Verbindungseinrichtung nach Anspruch 14, 15 oder 16, **dadurch gekennzeichnet, daß** die Anschläge (86, 90) eine evolventenförmig gekrümmte Längsflanke (88) aufweisen.

18. Verbindungseinrichtung nach einem der Ansprüche 14 bis 17, **dadurch gekennzeichnet, daß** die Anschläge (86, 90) an der Außenseite des Innenrohrstücks (45) und der Innenseite des ersten Rohrstutzens (32) angeordnet sind.

19. Verbindungseinrichtung nach einem der voranstehenden Ansprüche, **dadurch gekennzeichnet, daß** der erste Rohrstutzen (32) mehrere, in axialer Richtung versetzt zueinander angeordnete Ausnehmungen (38) aufweist.

20. Verbindungseinrichtung nach einem der voranstehenden Ansprüche, **dadurch gekennzeichnet, daß** das Sicherungsteil (34) aus Kunststoff gefertigt ist.

21. Filtervorrichtung und daran anschließbare Anschlußleitung, wobei die Filtervorrichtung (10) ein Gehäuse (12) aufweist, in das eine Filtereinheit (50) einsetzbar ist zum Filtrieren einer Flüssigkeit, insbesondere eines Hydrauliköls, und wobei die Anschlußleitung (28; 29; 30) mit dem Gehäuse (12) lösbar und flüssigkeitsdicht verbindbar ist, **dadurch gekennzeichnet, daß** die Filtervorrichtung (10) und die Anschlußleitung (28; 29; 30) eine Verbindungseinrichtung (36) nach einem der voranstehenden Ansprüche ausbilden.

22. Filtervorrichtung und daran anschließbare Anschlußleitung nach Anspruch 21, wobei das Gehäuse (12) mindestens einen ersten Rohrstutzen (32) aufweist.

23. Filtervorrichtung und daran anschließbare Anschlußleitung nach Anspruch 21 oder 22, **dadurch gekennzeichnet, daß** die Anschlußleitung (28; 29; 30) einen zweiten Rohrstutzen (33) umfaßt.

24. Filtervorrichtung und daran anschließbare Anschlußleitung nach Anspruch 21, 22 oder 23, **dadurch gekennzeichnet, daß** das Gehäuse (12) aus Kunststoff gefertigt ist.

25. Filtervorrichtung und daran anschließbare Anschlußleitung nach einem der Ansprüche 21 bis 24, **dadurch gekennzeichnet, daß** die Anschlußleitung (28; 29; 30) aus Kunststoff gefertigt ist.

## Claims

1. Connecting means for connecting two hydraulic elements, having a first pipe connecting piece (32), a second pipe connecting piece (33), a sealing element (60) and a securing part (34), the two pipe connecting pieces (32, 33) being produced from plastic and being able to be connected to one another in a releasable and fluid-tight manner by means of the securing part (34) and being able to turn in relation to one another in the circumferential direction while retaining their fluid-tight connection, the first pipe connecting piece (32) having at least one recess (38) on the outside, and the second pipe connecting piece (33) having a collar (45) and an outer piece of pipe (46), which between them form an annular space (48) which is bounded on one side in the axial direction and accommodates the sealing element (60), the outer piece of pipe (46) having at least one aperture (57), and the first pipe connecting piece (32) being able to be introduced into the annular space (48), and the securing part (34) having at least one catch element (66, 67, 68, 69, 70, 71), which can be inserted into the aperture (57), thereby entering a recess (38), and the sealing element being configured as a sealing ring (60), which is disposed in the region of the closed end of the annular space (48) between the first pipe connecting piece (32) and the collar (45), **characterized in that** the free end region of the first pipe connecting piece (32) can be pressed in between the sealing ring (60) and the outer piece of pipe (46) when it is inserted into the annular space (48), the free end wall of the first pipe connecting piece (32) being of stepped configuration and having a radially outer first end wall portion (41) and a radially inner second end wall portion (42), which is disposed offset in relation to the first end wall portion in the axial direction, and **in that** the sealing ring (60) is disposed in the axial direction between a bottom wall portion (52) of the annular space (48) and the second end wall portion (42) of the first pipe connecting piece (32).

2. Connecting means according to Claim 1, **characterized in that** the collar forms an inner piece of pipe (45), which projects beyond the outer piece of pipe (46) in the axial direction.

3. Connecting means according to Claim 1 or 2, **characterized in that** the securing part (34) has at least two diametrically opposed catch elements (66, 69; 67, 68; 70, 71).

4. Connecting means according to Claim 1, 2 or 3, **characterized in that** the securing part (34) has at least two catch elements (66, 67, 68, 69; 70, 71), disposed offset in relation to one another in the axial direction.

5. Connecting means according to one of Claims 1 to 4, **characterized in that** the at least one catch element (66 - 71) forms a positive engagement with an associated aperture (57).

6. Connecting means according to one of the preceding claims, **characterized in that** the securing part (34) has an elastically expandable sleeve (64), which can be fitted onto the outer piece of pipe (46) and on the inside has the at least one catch element (66 - 71).

7. Connecting means according to Claim 6, **characterized in that** the sleeve (64) surrounds the outer piece of pipe (46) only incompletely in the circumferential direction.

8. Connecting means according to Claim 7, **characterized in that** the sleeve (64) surrounds the outer piece of pipe (46) in the circumferential direction over an angular range from approximately 210° to about 330°.

9. Connecting means according to one of claims 6 to 8, **characterized in that** the at least one catch element (66 - 71) extends in the circumferential direction only over a partial region of the sleeve (64).

10. Connecting means according to Claim 9, **characterized in that** the at least one catch element (66 - 71) extends in the circumferential direction over an angular range from approximately 20° to about 50°.

11. Connecting means according to one of Claims 6 to 10, **characterized in that** the at least one catch element (66 - 71) is integrally connected to the sleeve (64).

12. Connecting means according to one of the preceding claims, **characterized in that** the at least one recess (38) extends in the circumferential direction over a greater angular range than the at least one catch element (66 - 71) entering the recess (38).

13. Connecting means according to one of the preceding claims, **characterized in that** the at least one recess is configured as an annular groove (38) encircling the first pipe connecting piece (32) in the circumferential direction.

14. Connecting means according to one of the preceding claims, **characterized in that** interacting stops (86, 90) are disposed on the first and second pipe connecting pieces (32, 33), the two pipe connecting pieces (32, 33) being able to turn with respect to one another in a first direction of rotation along their circumference when a specific torque is exceeded, with the stops (86, 90) being overcome, to limit a torque that can be transmitted from one of the two pipe connecting pieces (32, 33) to the other.

15. Connecting means according to Claim 14, **characterized in that** the interacting stops (86, 90) can only be overcome when a specific torque is exceeded in the case of a relative rotational movement of the pipe connecting pieces (32, 33) in the first direction of rotation, whereas they cannot be overcome in the case of a rotational movement of the pipe connecting pieces (32, 33) in the opposite direction of rotation.

16. Connecting means according to Claim 14 or 15, **characterized in that** the stops (86, 90) have a sawtooth-like cross-sectional profile.

17. Connecting means according to Claim 14, 15 or 16, **characterized in that** the stops (86, 90) have a longitudinal flank (88) curved in the form of an evolute.

18. Connecting means according to one of Claims 14 to 17, **characterized in that** the stops (86, 90) are disposed on the outer side of the inner piece of pipe (45) and the inner side of the first pipe connecting piece (32).

19. Connecting means according to one of the preceding claims, **characterized in that** the first pipe connecting piece (32) has a number of recesses (38) disposed offset in relation to one another in the axial direction.

20. Connecting means according to one of the preceding claims, **characterized in that** the securing part (34) is produced from plastic.

21. Filter device and connection line which can be connected to it, the filter device (10) having a housing (12) into which a filter unit (50) for filtering a fluid, in particular, a hydraulic fluid, can be inserted, and the connection line (28; 29; 30) being able to be connected to the housing (12) in a releasable and fluid-tight manner, **characterized in that** the filter device (10) and the connection line (28; 29; 30) form a connecting means (36) according to one of the preceding claims.

22. Filter device and connection line which can be connected to it according to Claim 21, the housing (12) having at least one first pipe connecting piece (32).

23. Filter device and connection line which can be connected to it according to Claim 21 or 22, **characterized in that** the connection line (28; 29; 30) comprises a second pipe connecting piece (33).

24. Filter device and connection line which can be connected to it according to Claim 21, 22 or 23, **characterized in that** the housing (12) is produced from plastic.

25. Filter device and connection line which can be connected to it according to one of Claims 21 to 24, **characterized in that** the connection line (28; 29; 30) is produced from plastic.

## Revendications

1. Dispositif de liaison destiné à relier deux éléments hydrauliques, comportant une première tubulure (32), une seconde tubulure (33), un élément d'étanchéité (60) et une pièce de sécurité (34), les deux tubulures (32, 33) étant fabriquées à partir d'une matière plastique et pouvant être reliées entre elles de façon amovible et étanche aux liquides au moyen de la pièce de sécurité (34), et pouvant être tournées l'une par rapport à l'autre dans une direction circonférentielle en conservant leur liaison étanche aux liquides, la première tubulure (32) possédant du côté extérieur au moins un évidement (38), et la seconde tubulure (33) possédant une collerette (45) ainsi qu'une pièce tubulaire extérieure (46) formant entre elles un espace annulaire (48), qui est limité d'un côté dans une direction axiale et qui reçoit l'élément d'étanchéité (60), la pièce tubulaire extérieure (46) possédant au moins une traversée (57) et la première tubulure (32) pouvant être insérée dans l'espace annuaire (48), et la pièce de sécurité (34) possédant au moins un élément de blocage (66, 67, 68, 69, 70, 71) qui peut être inséré dans la traversée (57), ledit élément de blocage pénétrant dans un évidement (38), et l'élément d'étanchéité étant conformé en joint torique (60) qui est disposé dans la région de l'extrémité fermée de l'espace annuaire (48) entre la première tubulure (32) et la collerette (45), **caractérisé en ce que** la région d'extrémité libre de la première tubulure (32) peut être emmanchée entre le joint d'étanchéité (60) et la pièce tubulaire extérieure (46) lors de l'insertion dans l'espace annuaire (48), la paroi frontale libre de la première tubulure (32) étant conformée en gradin et possédant une première portion de paroi frontale (41) radialement extérieure et une deuxième portion de paroi frontale radialement intérieure (42) décalée axialement par rapport à ladite première portion de paroi frontale, et **en ce que** le joint d'étanchéité (60) est disposé, dans une direction axiale, entre une portion de paroi de fond (52) de l'espace annuaire (48) et la deuxième portion de paroi frontale (42) de la première tubulure (32).

2. Dispositif de liaison selon la revendication 1,
**caractérisé en ce que** la collerette forme une pièce tubulaire intérieure (45) qui fait saillie, dans une direction axiale, au-dessus de la pièce tubulaire extérieure (46).

3. Dispositif de liaison selon la revendication 1 ou 2, **caractérisé en ce que** la pièce de sécurité (34) possède au moins deux éléments de blocage (66, 69 ; 67, 68 ; 70, 71) diamétralement opposés.

4. Dispositif de liaison selon la revendication 1, 2 ou 3, **caractérisé en ce que** la pièce de sécurité (34) possède au moins deux éléments de blocage (66, 67, 68, 69 ; 70, 71) disposés en étant décalés l'un par rapport à l'autre dans une direction axiale.

5. Dispositif de liaison selon l'une des revendications 1 à 4, **caractérisé en ce que** ledit au moins un élément de blocage (66à71) auquel est associée une traversée (57) forme une connexion à complémentarité de formes.

6. Dispositif de liaison selon l'une des revendications précédentes, **caractérisé en ce que** la pièce de sécurité (34) possède un manchon (64) expansible élastiquement, qui peut être placé sur la pièce tubulaire extérieure (46) et qui supporte du côté intérieur ledit au moins un élément de blocage (66 à 71).

7. Dispositif de liaison selon la revendication 6,
**caractérisé en ce que** le manchon (64) entoure seulement de façon incomplète la pièce tubulaire extérieure (46) dans une direction circonférentielle.

8. Dispositif de liaison selon la revendication 7,
**caractérisé en ce que** le manchon (64) entoure la pièce tubulaire extérieure (46) dans une direction circonférentielle sur une plage angulaire allant d'environ 210° à environ 330°.

9. Dispositif de liaison selon l'une des revendications 6 à 8, **caractérisé en ce que** ledit au moins un élément de blocage (66 à 71) s'étend dans une direction circonférentielle seulement sur une région partielle du manchon (64).

10. Dispositif de liaison selon la revendication 9,
**caractérisé en ce que** ledit au moins un élément de blocage (66 à 71) s'étend dans une direction circonférentielle sur une plage angulaire allant d'environ 20° à environ 50°.

11. Dispositif de liaison selon l'une des revendications 6 à 10, **caractérisé en ce que** ledit au moins un élément de blocage (66 à 71) est relié d'une seule pièce au manchon (64).

12. Dispositif de liaison selon l'une des revendications précédentes, **caractérisé en ce que** ledit au moins un évidement (38) s'étend dans une direction circonférentielle sur une plage angulaire qui est supérieure à celle dudit au moins un élément de blocage (66 à 71) pénétrant dans l'évidement (38).

13. Dispositif de liaison selon l'une des revendications précédentes, **caractérisé en ce que** ledit au moins un évidement est conformé en gorge annulaire (38) entourant dans une direction circonférentielle la première tubulure (32).

14. Dispositif de liaison selon l'une des revendications précédentes, **caractérisé en ce que** des butées (86, 90) coopérant l'une avec l'autre sont disposées au niveau des première et seconde tubulures (32, 33) de sorte que, lorsqu'un couple de rotation déterminé est dépassé, les deux tubulures (32, 33) peuvent tourner l'une par rapport à l'autre dans un premier sens de rotation le long de leur périphérie, en surmontant les butées (86, 90), afin de limiter un couple de rotation pouvant être transmis de l'une à l'autre des deux tubulures (32, 33).

15. Dispositif de liaison selon la revendication 14,
**caractérisé en ce que** les butées (86, 90) coopérant l'une avec l'autre ne peuvent être surmontées que si les tubulures (32, 33) tournent l'une par rapport à l'autre dans le premier sens de rotation lorsqu'un couple de rotation déterminé a été dépassé, alors qu'elles ne peuvent être surmontées lorsque les tubulures (32, 33) tournent l'une par rapport à l'autre dans le sens de rotation opposé.

16. Dispositif de liaison selon la revendication 14 ou 15, **caractérisé en ce que** les butées (86, 90) ont un profil en forme de dents de scie en section transversale.

17. Dispositif de liaison selon la revendication 14, 15 ou 16, **caractérisé en ce que** les butées (86, 90) possèdent un flanc longitudinal (88) incurvé en développante.

18. Dispositif de liaison selon l'une des revendications 14 à 17, **caractérisé en ce que** les butées (86, 90) sont disposées du côté extérieur de la pièce tubulaire intérieure (45) et du côté intérieur de la première tubulure (32).

19. Dispositif selon l'une des revendications précédentes, **caractérisé en ce que** la première tubulure (32) possède plusieurs évidements (38) disposés de façon décalée l'un par rapport à l'autre dans une direction axiale.

20. Dispositif de liaison selon l'une des revendications précédentes, **caractérisé en ce que** la pièce de sécurité (34) est fabriquée à partir d'une matière plastique.

21. Dispositif de filtrage et conduit de raccordement pouvant être raccordé à celui-ci, ledit dispositif de filtrage (10) possédant un carter (12) dans lequel peut être introduite une unité de filtrage (50) destinée à filtrer un liquide, notamment une huile hydraulique, et le conduit de raccordement (28 ; 29 ; 30) pouvant être relié au carter (12) de façon amovible et étanche aux liquides, **caractérisé en ce que** le dispositif de filtrage (10) et le conduit de raccordement (28 ; 29 ; 30) forment un dispositif de liaison (36) selon l'une des revendications précédentes.

22. Dispositif de filtrage et conduit de raccordement pouvant être raccordé à celui-ci, selon la revendication 21, où le carter (12) possède au moins une première tubulure (32).

23. Dispositif de filtrage et conduit de raccordement pouvant être raccordé à celui-ci, selon la revendication 21 ou 22, **caractérisé en ce que** le conduit de raccordement (28 ; 29 ; 30) comporte une seconde tubulure (33).

24. Dispositif de filtrage et conduit de raccordement pouvant être raccordé à celui-ci, selon la revendication 21, 22 ou 23, **caractérisé en ce que** le carter (12) est fabriqué à partir d'une matière plastique.

25. Dispositif de filtrage et conduit de raccordement pouvant être raccordé à celui-ci, selon l'une des revendications 21 à 24, **caractérisé en ce que** le conduit de raccordement (28 ; 29 ; 30) est fabriqué à partir d'une matière plastique.
